# FASCICULE DE BREVET EUROPEEN

(11) **EP 4 370 299 B1**
(45) Date de publication et mention de la délivrance du brevet: **14.05.2025**
(21) Numéro de dépôt: 22747324.6
(22) Date de dépôt: 08.07.2022
(51) Int. Cl.: B29B 7/48, B29B 7/58, B29B 7/72, B29B 7/82, B29B 17/04, C10C 3/00, B09B 3/00, B29K 95/00, B29L 31/10

(54) **MÉLANGEUR CHAUFFANT POUR PRODUITS COMPOSITES À SORTIE RÉGULÉE**
BEHEIZBARER MISCHER FÜR VERBUNDWERKSTOFFE MIT GESTEUERTEM AUSGANG
HEATABLE MIXER FOR COMPOSITE PRODUCTS WITH CONTROLLED OUTLET

(30) Priorité: 16.07.2021 FR 2107679
(43) Date de publication de la demande: 22.05.2024
(73) Titulaire: Soprema, 67100 Strasbourg (FR)
(72) Inventeur: BINDSCHEDLER, Pierre-Etienne, 67000 Strasbourg (FR); BALL, Patrick, 67140 Barr (FR)
(74) Mandataire: Cabinet Nuss
(86) Numéro de dépôt international: PCT/EP2022/069052
(87) Numéro de publication internationale: WO 2023/285303

(56) Documents cités:
- EP-A1- 0 231 584
- EP-A1- 0 988 952
- WO-A1-2008/103035
- WO-A1-2017/194873
- WO-A1-2021/104652
- US-A- 4 726 846

## Description

La présente invention concerne le domaine du recyclage et de la valorisation des déchets d'usine et de chantier dans le contexte des matériaux et systèmes d'étanchéité, en particulier en relation avec des membranes d'étanchéité bitumineuses, et a pour objet un mélangeur chauffant à sortie régulée, une installation de traitement et de revalorisation de produits composites à base de matières thermoplastiques ainsi qu'un procédé de commande d'une telle installation.

Dans le cadre de la tendance générale à rechercher une possible valorisation des déchets, une demande grandissante, et actuellement non solutionnée de manière satisfaisante, ni au niveau technique, ni au niveau économique, concerne les déchets d'usine et surtout de chantiers dans le domaine de l'étanchéité, en particulier en relation avec les membranes d'étanchéité bitumineuses.

Un des problèmes majeurs rencontré, et à ce jour non solutionné de manière satisfaisante dans les propositions de l'état de la technique, concerne la présence, souvent intriquée avec la matière à valoriser (essentiellement le liant bitumineux), de polluants non valorisables, notamment des particules solides dures, du type métalliques, minérales ou autres (provenant d'éléments d'assemblage ou de fixation, de couches de recouvrement, de couches de protection en surface, ou similaires).

En particulier, les déchets de déconstruction du marché de la rénovation représentent à ce jour un gisement potentiel important de membranes d'étanchéité à traiter, estimé à ce jour à environ 100 000 tonnes par an en France (estimation par la chambre syndicale de l'étanchéité française), ce gisement étant renouvelé chaque année. Le coût d'enfouissement de ces déchets augmente depuis de nombreuses années, et cette tendance devrait se poursuivre, surtout qu'aucune véritable solution industrielle de traitement des déchets de déconstruction n'est proposée à ce jour.

Il existe donc une demande forte et constante pour tenter de trouver une solution industrielle pour réduire la consommation d'une ressource fossile qui se raréfie et qui serait réellement efficiente dans le recyclage des membranes d'étanchéité.

Or, la constitution et donc le traitement de ces déchets sont complexes, car lors de réfections de toitures de bâtiments, il est possible, et pratique courante, de superposer plusieurs couches de membranes les unes sur les autres, et de les assembler par collage ou soudure, et de les fixer mécaniquement au support.

Toutefois, au bout d'un certain nombre de réfections (dépendant de la législation du pays concerné en la matière), il est nécessaire techniquement et obligatoire administrativement d'enlever la totalité du système de couverture et de mettre en place une nouvelle étanchéité sur la toiture (à charpente ; toitureterrasse ou autre) à l'état brut.

Les déchets récupérés à l'issue de cette opération d'enlèvement total, dits déchets de déconstruction, comprennent, pour l'essentiel, des stratifiés de membranes bitumeuses accolées les unes aux autres et présentant divers types de finition, notamment granulés d'ardoises, sable, feuilles d'aluminium complexé (PET-alu). Ces déchets peuvent également contenir des polluants solides, notamment isolant (PUR, XPS, laine minérale, fibres de bois...), pièces métalliques (accroches métalliques des membranes fixées mécaniquement, lames de scie pour la découpe des déchets...), et autres détritus divers associés à l'entreposage d'une benne de récupération des déchets sur un chantier de bâtiment (cailloux, pierres, canettes...).

Ainsi, en relation avec la demande exprimée ci-dessus, les produits composites qu'il serait souhaitable de pouvoir traiter dans le cadre du champ d'application concerné par l'invention comprennent essentiellement :
- majoritairement des membranes bitumeuses contenant une armature par ex. : Polyester non tissé PNT ou voile de verre...), un liant bitumineux (ex : polymère et bitume, additifs, charge...), une finition de surface (ex : granulés d'ardoises sable, feuilles d'aluminium complexées...). Potentiellement ces membranes sont agglomérées en couches successives fusionnées les unes aux autres lors de la pose par chauffage, et formant ainsi des plaques (Dimension des plaques récupérées : ~ 1 m x ~1 m x (1 à 20) cm). Alternativement, les produits à traiter peuvent comprendre des rouleaux de membranes bitumeuses issus de production (second choix) ou des chutes de fabrication de tels rouleaux. Alternativement ces membranes peuvent être prébroyées.
- des polluants solides de diverses natures : isolants (PUR, XPS, laine minérale, fibres de bois...), pièces métalliques (accroches métalliques des membranes fixées mécaniquement, lames de scie pour la découpe des déchets...), ou détritus divers (sable, gravillons, cailloux, pierres, canettes...).

A l'issue d'au moins une première phase du traitement, le produit sortant (extrant) devrait comprendre en particulier des liants lisses à base de bitume, intégrant également des polymères et des particules ou des fragments de fibres dispersés, préférentiellement de dimension inférieure à 100 µm.

De plus, alors que les intrants sont à température ambiante (typiquement entre 0°C et 30°C), l'extrant de cette première de traitement devrait, par transformation adéquate des intrants, être au moins à la température d'utilisation, des liants bitumineux et thermoplastiques, à savoir entre 150°C et 200°C typiquement.

Un tel état de l'extrant facilite son traitement ultérieur, en particulier l'extraction des polluants solides macroscopiques, non ou insuffisamment réduits durant cette première phase de traitement (tels que cailloux, pierres, gravillons, vis, boulons, rivets, clous, fragments de tôle, ...), ainsi que son transfert ultérieur et son conditionnement sous une forme valorisable et avantageusement réutilisable.

Pour ce faire, et compte tenu du type d'intrants à transformer / valoriser et de leur état à l'entrée, le dispositif technique réalisant ladite (au moins) première phase de traitement devrait réaliser, progressivement et simultanément, un chauffage des intrants jusqu'à aboutir à une température de ramollissement / fusion du liant bitumineux (au moins à proximité de la sortie) et un cisaillement des membranes (prédécoupées ou pas) pour aboutir à un délitement de leurs armatures et à leur désagrégation. Ce dispositif devrait en outre autoriser le passage des polluants macroscopique durs précités, sans risque de blocage, et présenter préférentiellement un taux d'usure limité.

Or, les appareils et installations connus à ce jour pour le recyclage du type de produits précité ne permettent pas de répondre à la demande ci-dessus, ni d'aboutir au résultat souhaité, en tout cas pas de manière fiable et pérenne.

Ainsi, les séparateurs de polluants métalliques ferromagnétiques (à aimants) ou non ferromagnétiques (à courant de Foucault) ne ciblent qu'un type de polluants ne transforment pas ou insuffisamment les produits extrants, et n'autorisent pas une extraction d'éléments noyés, imbriqués ou trop intimement liés aux matériaux à valoriser.

De même, les systèmes basés sur la séparation du fait de différences de densités entre composantes, du type systèmes centrifuge, tables densimétriques, dispositif à décantation ou analogues, sont soit inefficaces, soit économiquement non viables.

Certains dispositifs connus assurent de manière satisfaisante certaines des fonctions précitées attendues pour la première phase de traitement, mais pas toutes.

Ainsi, les dispositifs de traitement du type pétrin à bras en Z chauffés réalisent un bon cisaillement, mais un mauvais chauffage (procédé réalisé par fournée / lot), et les mélangeurs à rames ("paddle mixer") présente un chauffage satisfaisant des produits et sont robustes aux polluants, mais réalisent un cisaillement médiocre.

En outre, les systèmes connus (cf. notamment WO 2008/103035, US 2005/263625, EP 1 123 182, EP 0 988 952**,** US 4 726 846 et WO 2009/090546) sous forme d'extrudeuses ou de convoyeurs à vis hélicoïdale classique, sont quant à eux sujets à blocage lors de la présence d'une particule macroscopique dure (type vis, boulon) et subissent une usure importante et rapide en présence de particules dures microscopiques (tel que du sable). **Certains d'entre eux (**WO 2021/104652) **sont pourvus d'une possibilité d'évacuation des déchets, une fois les produits sortis.**

Enfin, on connait également des convoyeurs-mélangeurs à double vis d'Archimède, dans lesquels les vis ainsi que l'auge sont chauffées : elles réalisent un bon chauffage et un bon cisaillement, mais sont également sujets aux blocages et à l'usure importante mentionnées ci-dessus lors du traitement de produits/déchets composites évoqués précédemment.

La demanderesse a déjà mis au point un mélangeur permettant de surmonter au moins la plupart des inconvénients des mélangeurs connus précités. Ce mélangeur présentant une constitution allongée définissant un trajet de traitement longitudinal entre au moins une entrée et au moins une sortie et comprenant une auge qui est chauffée et dans laquelle est montée au moins une vis, préférentiellement deux vis jumelées parallèles et mutuellement interpénétrantes au niveau de leurs filets, formant organe(s) de traitement par réduction dimensionnelle et chauffage et de déplacement vers ladite ou lesdites **sorties** pour les produits à traiter introduits au niveau de l'entrée ou de chaque entrée. Ladite ou chaque vis comprend un arbre support qui est chauffé, entrainé en rotation autour de son axe et pourvu de pales formant le filet de la vis concernée, le ou chaque arbre étant disposé dans l'auge en étant arrangé selon la direction de trajet et les produits étant déplacés en cours de traitement depuis la ou les entrée(s) jusqu'au niveau de la ou des sortie(s) sous l'action de la ou des vis. Ce mélangeur est décrit dans la demande de brevet PCT WO 2021/213793, état de la technique selon l'article 54(3) CBE, au nom de la demanderesse et peut faire partie d'une installation de traitement telle que divulguée dans la demande de brevet PCT WO 2021/213792 également au nom de la demanderesse. **Des mélangeurs sensiblement du même type, mais néanmoins de constructions différentes, sont connus du document** EP 0 231 584 **et du document** WO 2017/194873**.**

Or, les inventeurs ont pu vérifier lors de tests qu'il pouvait être intéressant, voire nécessaire dans certains modes de fonctionnement, de pouvoir réguler la quantité de produit traité (extrant) quittant le mélangeur, préférentiellement en ne complexifiant pas notablement la construction du mélangeur, en pouvant si possible garantir un écoulement sous l'effet de la seule gravité et sans mise en oeuvre de moyen additionnel et en fournissant une solution adaptée à la nature particulière de l'extrant.

Pour répondre à cette demande, l'invention, définie par l'objet de la revendication 1, a pour objet un mélangeur chauffant pour produits composites à base de matière(s) thermoplastique(s).

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A] est une vue éclatée d'un mélangeur chauffant du type visé dans le cadre de l'invention, mais dépourvu d'organe de contrôle du flux de sortie de produit traité ;
[Fig. 1B] est une vue en perspective et de dessus d'un mélangeur chauffant selon la figure 1A, le couvercle de fermeture de l'auge étant enlevé ;
[Fig. 2A] est une vue en coupe selon un plan vertical contenant l'axe longitudinal du mélangeur de la figure 1B ;
[Fig. 2B] est une vue en élévation selon la direction de l'axe longitudinal et partiellement en transparence du mélangeur représenté figure 1B ;
[Fig. 3] est une vue de dessus des deux vis faisant partie du mélangeur des figures 1 et 2 ;
[Fig. 4] est une vue en coupe selon A - A du mélangeur de la figure 1B ;
[Fig. 5] est une vue partielle et en perspective du mélangeur de la figure 4 ;
[Fig. 6] est une vue de détail d'une structure de raclage faisant partie du mélangeur représenté figures 4 et 5 ;
[Fig. 7A] et
[Fig. 7B] sont des vues en élévation latérale (7A) et en coupe (7B), selon un plan vertical décalé par rapport à celui de la figure (7A), d'un mélangeur chauffant selon l'invention ;
[Fig. 8A] et
[Fig. 8B] sont des vues partielles en coupe et en perspective, au niveau des sorties du mélangeur des figures 7, selon deux directions différentes et avec des degrés d'ouverture différentes des sorties ;
[Fig. 9] est une représentation schématique illustrant la boucle d'asservissement régulant le flux sortant du mélangeur des figures 7 et 8, et,
[Fig. 10] est une vue en perspective d'une installation de traitement et de revalorisation comprenant deux mélangeurs selon les figures 1 à 9, montés en parallèle et formant les premiers postes de traitement de cette installation.

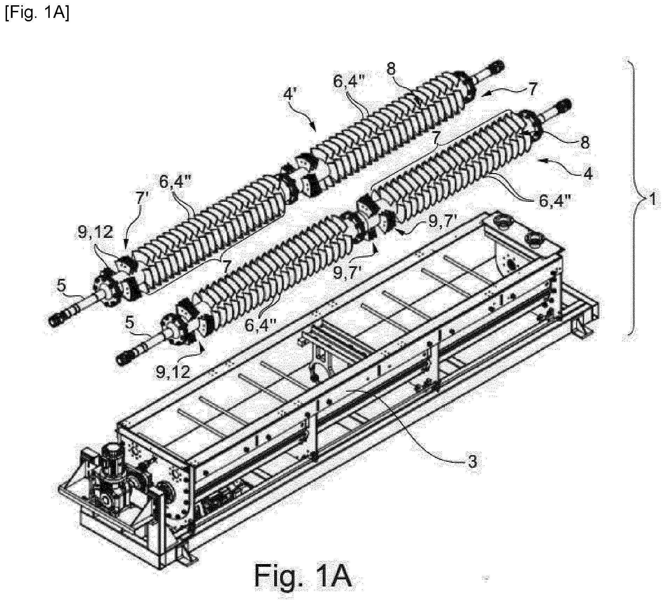

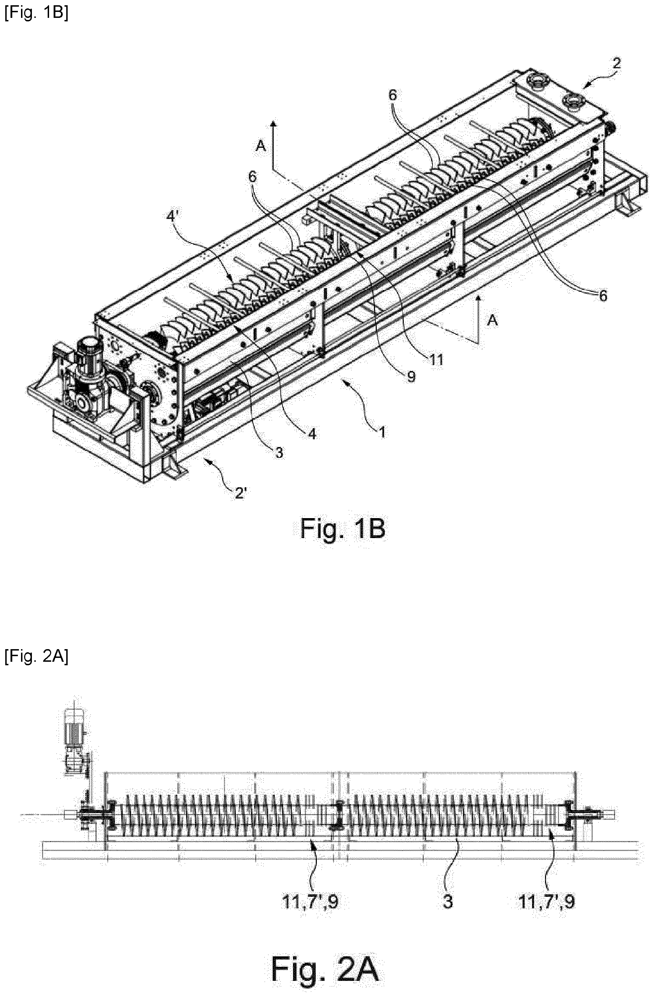

Les figures 1 à 8 illustrent, au moins en partie, un mélangeur chauffant 1 pour produits composites à base de matière(s) thermoplastique(s), notamment de déchets d'usines ou de chantiers contenant majoritairement des membranes bitumineuses.

Ledit mélangeur 1 présente une constitution allongée définissant un trajet de traitement longitudinal entre au moins une entrée 2 et au moins une sortie 2' et comprenant une auge 3 qui est chauffée et dans laquelle est montée au moins une vis 4, 4', préférentiellement deux vis 4 et 4' jumelées parallèles et mutuellement interpénétrantes au niveau de leurs filets 4", formant organe(s) de traitement par réduction dimensionnelle et chauffage et de déplacement vers ladite ou lesdites **sortie(s)** 2' pour les produits à traiter introduits au niveau de l'entrée 2 ou de chaque entrée 2. Ladite ou chaque vis 4, 4' comprend un arbre support 5 qui est chauffé, entrainé en rotation autour de son axe et pourvu de pales 9, 9' formant le filet 4" de la vis 4, 4' concernée, le ou chaque arbre 5 étant disposé dans l'auge 3 en étant arrangé selon la direction de trajet DT et les produits étant déplacés en cours de traitement depuis la ou les entrée(s) 2 jusqu'au niveau de la ou des sortie(s) 2' sous l'action de la ou des vis 4, 4'.

L'auge 3 et l'arbre 5 peuvent être chauffée par un fluide liquide ou comprendre des moyens chauffants rapportés, notamment électriques. La ou chaque sortie est préférentiellement située dans une région inférieure de l'auge 3 dans laquelle l'extrant peut être acheminé par l'action de déplacement de la ou des vis 4, 4'.

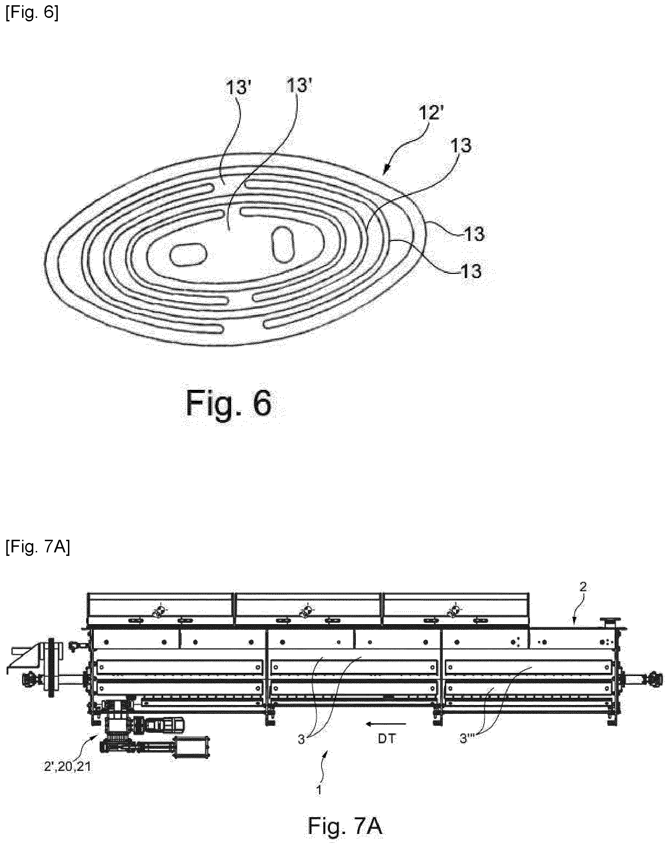

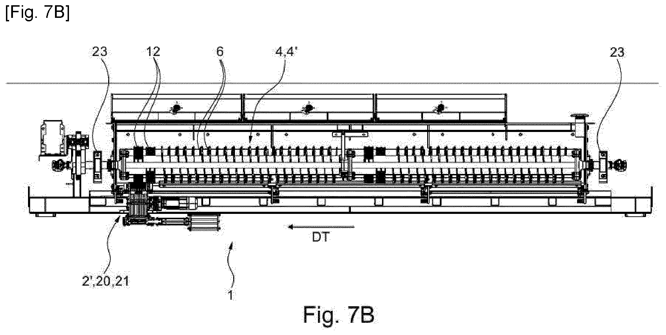

Conformément à l'invention, et comme le montrent les figures 7 à 9, ce mélangeur 1 est caractérisé en ce que l'ouverture de la ou chaque sortie 2' est formée directement dans la paroi 3' de l'auge 3, en ce que ledit mélangeur 1 comporte, au niveau de la ou de chaque sortie 2', un organe 20 de contrôle du flux d'extrant liquide ou semi-liquide de produits traités, s'écoulant à travers la sortie associée 2', en ce que le ou chaque organe 20 de contrôle du flux d'extrant consiste en une vanne à clapet ou volet pivotant, en ce que ledit clapet ou volet consiste en une portion 3" de la paroi 3' de l'auge 3 balayée par des pales 9, 9', cette portion 3" pouvant être déplacée, préférentiellement continûment, entre une position de fermeture dans laquelle elle obture la sortie 2' considérée et est intégrée à ladite paroi 3' en tant que partie constitutive de cette dernière, préférentiellement avec raccordement surfacique continu avec la face interne de cette paroi, et une position d'ouverture maximale dans laquelle la sortie 2' correspondante est sensiblement totalement ouverte.

Grâce à ces dispositions, l'invention répond à la demande exprimée précédemment, en y apportant une solution simple et performante, adaptée à la nature de l'extrant, et sensiblement en accord avec les requêtes préférentielles également évoquées ci-dessus. Du fait que la région de l'auge 3 présentant la ou les sorties 2' est balayée par la ou au moins une des vis, toute accumulation d'extrant dans cette région est empêchée lorsque la vanne 20 correspondante est à l'état fermé. Cela évite la formation de voûte ou d'épaisseur d'extrant pouvant freiner, voire bloquer l'écoulement d'extrant à l'ouverture de la vanne considérée.

Selon l'invention, le ou chaque organe 20 proposé est ainsi du type à ouverture de passage progressive et peut être commandé, de manière indépendante, soit pour une délivrance d'extrant en mode continu (le débit de matière évacuée étant alors déterminée directement et uniquement par le degré d'ouverture), soit pour une délivrance d'extrant en mode séquentiel ou par lots successifs (ouverture par intermittence, le débit étant fixé à la fois par le degré d'ouverture et le temps d'ouverture).

Lorsque le mélangeur 1 présente deux ouvertures 2' et deux organes 20, ces derniers pourront être commandés soit séparément et indépendamment, soit de manière commune et synchrone, ou encore selon l'une ou l'autre manière en fonction des souhaits de l'opérateur ou des nécessités du procédé de traitement global.

Avantageusement, l'auge 3 comporte une paroi 3' à double enveloppe et l'arbre 5 est un tube creux, les deux étant parcourus par un fluide chaud (huile). La paroi 3' pourra en variante également être simple peau et comporter des canaux 3‴de circulation de fluide chaud sur l'extérieur. Le ou chaque clapet 3" présente avantageusement une structure à simple paroi (par exemple plaque métallique de forme incurvée), éventuellement isolée thermiquement.

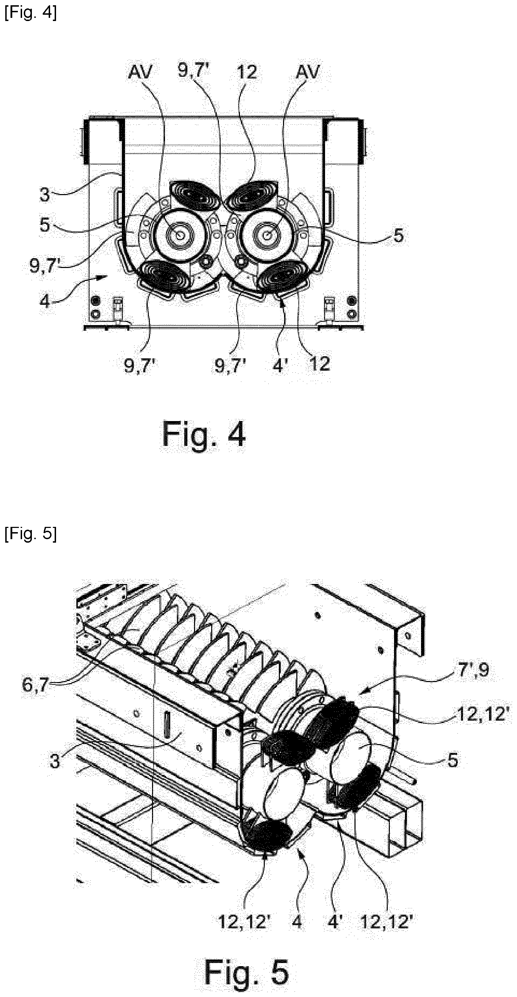

Comme le montrent les figures 4, 5 et 8 notamment, la paroi 3' de l'auge 3 présente, en partie inférieure formant fond de l'auge, une conformation courbe (partiellement cylindrique) épousant la forme de la ou chaque vis 4, 4' sur une partie de sa ou leur circonférence. C'est dans cette ou ces région(s) de fond de la paroi 3' que se trouve(nt) préférentiellement la ou les sorties 2', le ou chaque clapet présentant une forme s'intégrant continûment dans la région de fond correspondante.

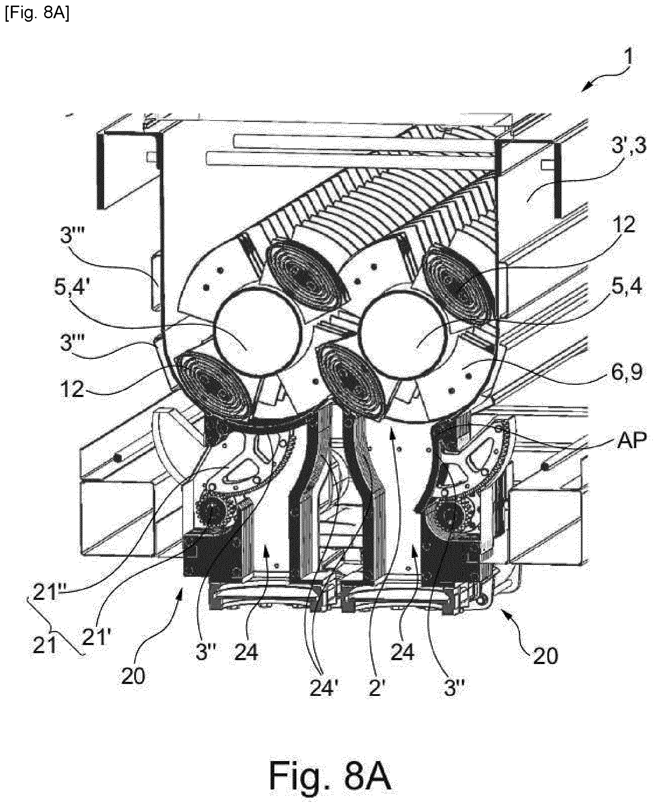

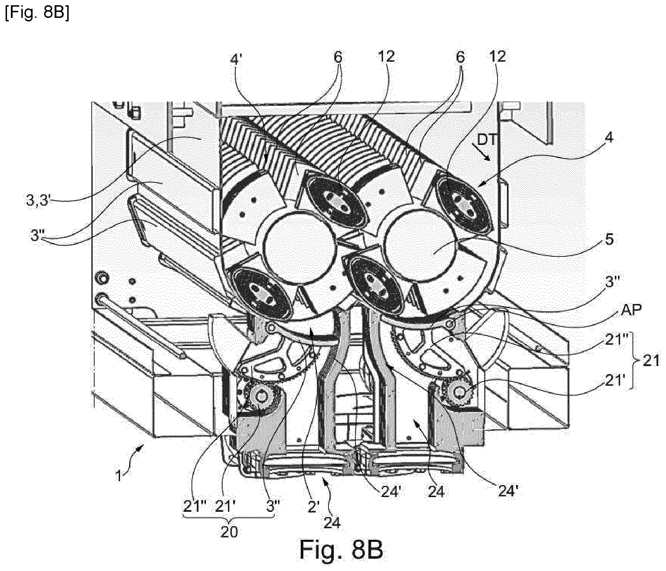

Selon une possible construction pratique de l'invention, illustré sur les figures 8 et alliant simplicité, robustesse et précision de contrôle, la ou chaque vanne 20 à clapet pivotant comprend, en plus du clapet 3" formant une portion mobile de la paroi 3' de l'auge 3, un actionneur sous la forme d'un dispositif motorisé à crémaillère 21, déterminant le positionnement en pivotement du clapet 3" considéré, et donc l'état d'ouverture/de fermeture de la sortie correspondante. Ce dispositif motorisé 21 se présente avantageusement sous la forme d'un pignon entrainé 21' engrenant avec une crémaillère 21" en arc de cercle solidaire dudit clapet 3", préférentiellement portant ce dernier. La position du ou de chaque clapet 3" peut être déterminée très précisément par un codeur de position ou par un capteur (au niveau de l'axe de pivotement du clapet 3" ou du pignon motorisé 21').

En accord avec une construction pratique simple illustrée sur les figures 8, il peut être prévu, de manière combinée, que l'ouverture de la ou chaque sortie 2' est formée dans une portion incurvée de la paroi 3' de l'auge 3, que le clapet 3" considéré, qui constitue une portion mobile de ladite paroi 3' apte et destinée à fermer de manière étanche cette ouverture par rapport à l'extrant, présente une face intérieure avec une surface courbe de rayon identique à celui de la région incurvée environnante de la face interne de la paroi 3' autour de l'ouverture de sortie concernée et que l'axe AP de la liaison à pivotement dudit clapet 3" avec ladite paroi 3' est parallèle à l'axe de rotation du ou de chacun des arbre(s) 5.

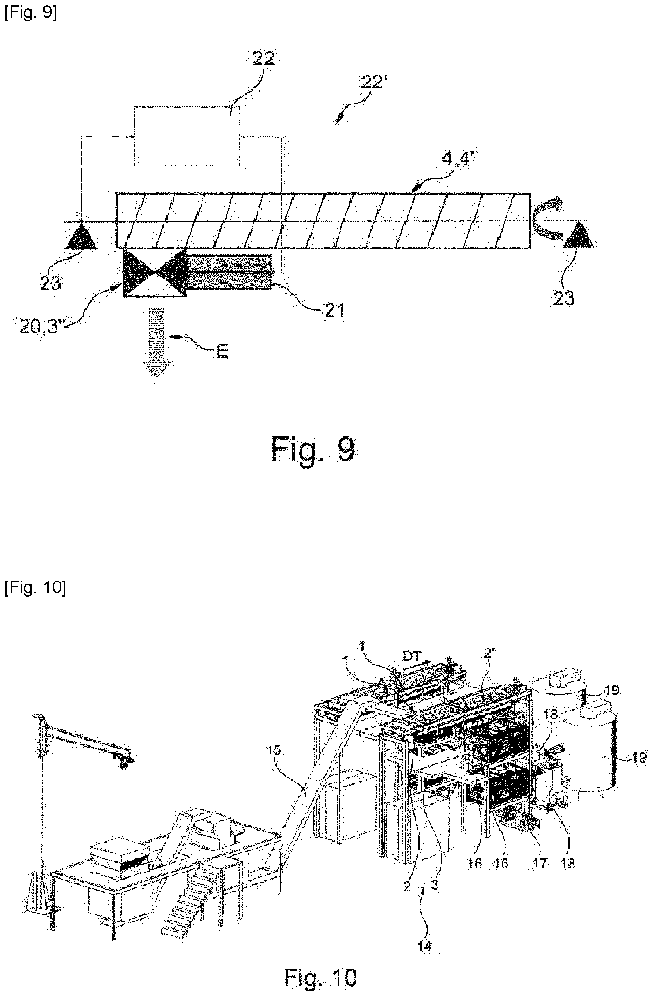

Selon une caractéristique de l'invention, ressortant de la figure 9, la ou chaque organe ou vanne 20 de contrôle du flux d'extrant E s'écoulant à travers la sortie associée 2' est commandé par un dispositif automatique de régulation 22 associé ou intégré à un système de commande du fonctionnement du mélangeur 1, le cas échéant en relation avec un programme de pilotage du mode de fonctionnement dudit mélangeur 1, ce dispositif 22 évaluant au moins des signaux indicatifs de la quantité de produits présente dans ce mélangeur 1 et commandant la position ou l'état de l'organe 20 en conséquence, par exemple par le biais du dispositif motorisé à crémaillère 21 précité.

Préférentiellement et comme le montre symboliquement la figure 9 et partiellement les figures 7, le dispositif automatique de régulation 22 fait partie d'une boucle 22' d'asservissement du flux d'extrant dudit mélangeur 1. Les signaux indicatifs de la quantité de produits présente dans le mélangeur 1 peuvent être fournis par au moins un moyen 23 de pesée dudit mélangeur 1, par exemple une paire de pesons. La boucle 22' peut elle-même faire partie ou dépendre d'un système de pilotage d'une installation de traitement 14 à laquelle est intégrée ledit mélangeur 1.

Comme le montrent les figures 8 et en vue de pouvoir par exemple diriger le flux d'extrant vers un poste de traitement consécutif (en évitant les dispersions), l'auge 3 peut comprendre, au niveau de la ou de chaque sortie 2' et dans le prolongement vers l'extérieur de l'ouverture de cette dernière, sous forme d'ajour rectangulaire dans la paroi de l'auge 3, un embout 24 formant canal d'évacuation. Cet embout 24 fournit en outre avantageusement une surface 24' d'écoulement privilégié de l'extrant, attenante à l'ouverture de la sortie 2' concernée et avec laquelle le clapet 3" coopère lors de son mouvement d'ouverture pour définir un passage d'évacuation à section variable.

Conformément à une construction pratique préférée, favorisant une ouverture progressive précise de la sortie 2' concernée, l'extrémité libre du clapet pivotant 3" balaie la surface 24' d'écoulement privilégié sur une partie de son mouvement de pivotement, au moins au début du dégagement de l'ouverture de la sortie 2', ledit clapet 3" constituant avantageusement une partie du canal d'évacuation 24 dans sa position d'ouverture maximale. Une telle configuration du clapet 3" et de la surface 24' permet notamment une autorégulation du débit d'extrant E pour une viscosité donnée.

Bien que non représenté, le mélangeur chauffant 1 selon l'invention peut ne comporter qu'une seule vis, et donc une seule sortie et un seul organe de contrôle du flux d'extrant.

Toutefois de manière préférée et comme cela ressort des figures annexées, le mélangeur selon l'invention comporte deux vis parallèles jumelées 4 et 4', à chaque vis 4, 4' étant associé une sortie 2' respective pourvue d'un organe 20 correspondant de contrôle du flux d'extrant évacué à travers la sortie 2' concernée.

Comme le montrent les figures 1 à 3 et 7B, le filet 4" de la ou chaque vis 4, 4' est un filet interrompu ou discontinu et comprend, sur une majeure partie au moins de la longueur de la vis 4, 4' considérée, une pluralité de premières pales 6 en forme de plaques planes et lisses, séparées entre elles axialement et radialement et toutes arrangées selon un pas de vis constant et avec une inclinaison déterminée par rapport à un plan perpendiculaire à l'axe AV de la vis 4, 4' considérée.

Le filet hélicoïdal 4"" de chacune des deux vis 4 et 4', qui tournent selon des sens de rotation mutuellement contraires de manière à générer un mouvement de transport de matière de l'entrée 2 vers la sortie 2' de l'auge 3 (selon la direction DT), est donc constitué par une pluralité de pales 6 en forme de secteurs d'anneau plans, distincts et séparés, solidarisés (par soudage par exemple) avec l'arbre 5 de la vis 4, 4' concernée le long d'une ligne hélicoïdale. De plus, ces pales 6 sont arrangées avec un espacement mutuel et une extension angulaire individuelle tels que des alignements 7 longitudinaux de pales 6 sont constitués.

Préférentiellement, chaque première pale 6 présente une extension angulaire autour de l'arbre considéré qui est inférieure à 180°, avantageusement inférieure à 120°, préférentiellement d'environ 90°. De plus, lesdites premières pales 6 sont configurées et arrangées sur l'arbre support 5 concerné de manière à constituer un nombre limité d'alignements 7 de pales 6 selon la direction de l'axe AV de la vis 4, 4', qui sont répartis sur le pourtour de l'arbre support 5 et qui définissent entre eux des zones dégagées 8 s'étendant le long de la vis 4, 4' entre alignements 7 voisins.

Ainsi chacune des vis 4, 4' se présente sensiblement, au moins sur une partie de sa longueur, comme une vis d'Archimède à filet hélicoïdal continue, mais découpé selon la direction de l'axe AV de l'arbre 5 pour former des trouées rectilignes parallèles audit axe AV.

Ce sont les espacements entre les pales 6, et plus particulièrement les passages en forme de trouées résultants, qui autorisent le transport sans blocage des polluants macroscopiques (présents dans les produits à traiter formant intrants) de l'entrée 2 vers la sortie 2'.

De plus, les pales 6 métalliques sont relativement épaisses (par exemple 8 à 15 mm) de manière à garantir une certaine inertie thermique pour chauffer le bitume dans la masse, tout en happant et en "démottant" les intrants sous forme de membranes. (Effet "introduction couteau chaud dans beurre froid"). En outre, en étant planes et lisses, les pales 6 n'offrent aucune accroche au liant bitumeux ou autre.

En accord avec une variante de réalisation préférée, illustrée sur les figures 1, 2, 4 , 5 et 7B, il est prévu que la ou chaque vis 4, 4' comporte, sur au moins une partie de sa longueur, une pluralité de secondes pales 9 en forme de plaques planes, séparées entre elles et toutes arrangées selon des plans perpendiculaires à l'axe de la vis 4, 4' considérée, que chaque seconde pale 9 présente une extension angulaire inférieure à 180°, avantageusement inférieure à 120°, préférentiellement d'environ 90°, et que lesdites secondes pales 9 sont configurées et arrangées sur l'arbre support 5 concerné de manière à constituer un nombre limité d'alignements 7' de pales selon la direction de l'axe AV de la vis 4, 4' et autour de l'arbre 5, des zones dégagées s'étendant entre les alignements 7' voisins (angulairement ou circonférentiellement) le long de la vis 4, 4'.

Alors que les premières pales 6 sont montées sur l'arbre 5 respectif avec une inclinaison par rapport à un plan perpendiculaire à l'axe AV dudit arbre, les secondes pales 9 sont quant à elles montrées perpendiculairement à cet axe AV.

Avantageusement, chaque alignement 7' de secondes pales 9 ne s'étend que sur une fraction de la longueur de la partie de la vis 4, 4' les comportant et sur une fraction du pourtour de l'arbre 5 de cette dernière et constitue au moins un groupe local de secondes pales 9, chaque groupe étant décalé angulairement et/ou axialement par rapport à chacun des autres groupes et au moins un, préférentiellement chaque, groupe de secondes pales 9 d'une vis 4, 4' venant en engagement interpénétrant, de manière interstitielle, avec un groupe correspondant de secondes pales 9 de l'autre vis 4', 4.

Additionnellement ou alternativement, l'auge 3 peut comporter, sur une partie au moins de sa face interne, située en regard de la ou des partie(s) longitudinale(s) de la vis 4, 4' comportant des secondes pales 9, des contre-pales fixes, situées dans des plans parallèles et interstitiels par rapport aux plans des secondes pales 9 et venant en engagement interpénétrant avec les secondes pales 9 lors de la rotation de la vis 4, 4' considérée, chaque arrangement coopérant d'au moins deux groupes de secondes pales 9 mobiles appartenant respectivement à l'une des deux vis 4, 4', et éventuellement de contre-pales fixes, constituant un module 11 de cisaillement privilégié.

Ainsi, les secondes pales 9 des vis 4, 4' ne sont pas seulement interférentes et interpénétrantes entre les deux vis 4 et 4', mais aussi avec des contres-pales fixes installées dans l'auge 3, par exemple sur une structure support montée de manière interchangeable dans l'auge 3 (non représenté).

Les zones du mélangeur 1 comportant des groupes de pluralités de secondes pales 9 mobiles, et éventuellement de contre-pales fixes, constituent, du fait de la densité d'éléments formant lames interpénétrantes avec de faibles entrefers, des modules de cisaillement intense. Le mélangeur 1 peut comporter un ou plusieurs tel(s) module(s), le cas échéant répartis le long de l'auge 3. Préférentiellement, un (dernier) module de cisaillement est arrangé près de la sortie du mélangeur 1.

La prévision d'une répartition des secondes pales 9 par alignements 7' espacés circonférentiellement et/ou axialement permet aux polluants macroscopiques solides de passer les zones de ces modules sans bloquer les vis 4, 4'.

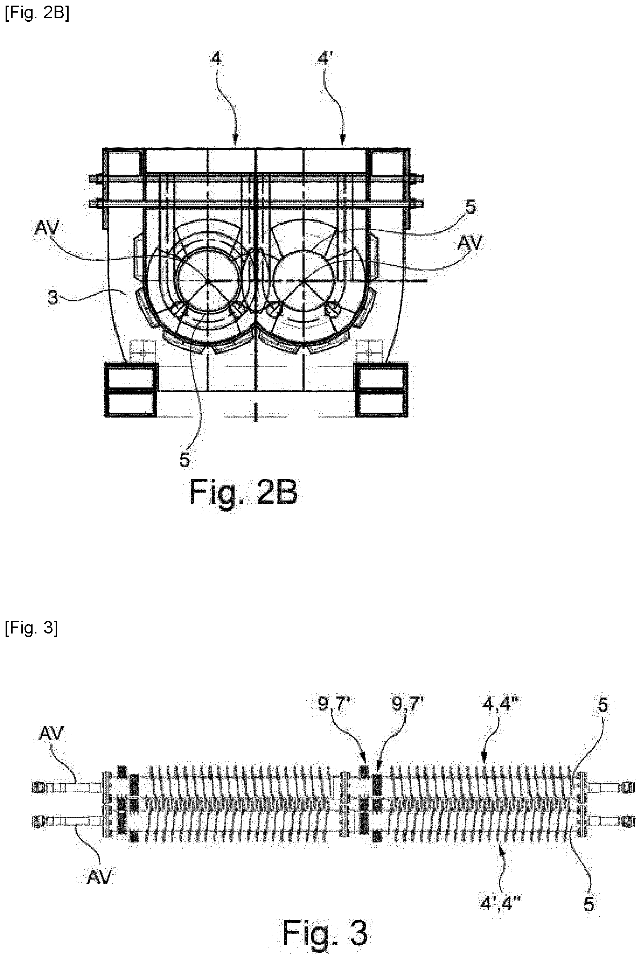

Comme le montrent à titre d'exemple illustratif les figures 2A, 3 et 7B, la ou chaque vis est avantageusement constituée de segments longitudinaux différenciés comportant alternativement des alignements de premières pales 6 inclinées et des alignements de secondes pales 9 perpendiculaires.

Afin de limiter l'usure des premières et/ou secondes pales 6, 9 (par l'aménagement d'un entrefer suffisant entre leurs bords extérieurs et la paroi de l'auge 3), tout en favorisant, d'une part, le transfert thermique entre les vis 4, 4' et/ou l'auge 3 et les produits à traiter en transit et, d'autre part, le cisaillement

(malgré la présence d'un entrefer important - par exemple 0,5 mm à 3 à 5 cm - entre pales 6, 9 et auge 3), il peut être prévu qu'au moins certaines premières et/ou secondes pales 6, 9 sont pourvues, au niveau de leur bord libre extérieur 9', d'au moins une structure de raclage 12 rapportée, saillante radialement par rapport audit bord 9' et déformable élastiquement au moins selon une direction radiale, cette ou ces structures de raclage 12 balayant, avantageusement avec appui glissant sous pression élastique, au moins une partie de la face interne de la paroi 3' de l'auge 3 (voir figures 4 à 6 et 8).

Comme le montrent les figures 8, au moins une structure de raclage 12 (préférentiellement plusieurs montées sur les extrémités de pales 6, 9 des vis) est présente au niveau de la ou chaque portion 3" de la paroi 3' de l'auge 3 formant clapet, la surface interne de cette portion 3" étant balayée par cette structure à chaque rotation de la vis 4, 4' concernée. Ainsi, les clapets 3" sont garantis d'être exempts de toute accumulation de matière qui pourraient bloquer leur fonctionnement et cela permet de conserver la face interne de la paroi 3' propre et débarrassée de toute agglomération de composants de l'extrant (fibres, minéraux, bitume, ...), susceptible de gêner l'écoulement d'extrant à l'ouverture (notamment lors d'une ouverture partielle) et/ou la manipulation du clapet.

En accord avec un mode de réalisation préféré, ressortant des figures 4 à 6 et 8 précitées, la ou chaque structure rapportée déformable 12 consiste en une plaquette 12', ou en un empilement d'au moins deux plaquettes 12', à contour sensiblement de forme elliptique et comportant des découpes définissant une pluralité d'anneaux elliptiques 13 concentriques, reliées par des ponts de matière 13' entre anneaux 13 adjacents, ladite structure 12 étant montée sur la pale 6, 9 correspondante avec une orientation telle que la direction du petit demi-axe du contour elliptique passe par l'axe longitudinal AV de l'arbre support 5.

Ledit mélangeur 1 comporte avantageusement deux vis parallèles jumelées 4 et 4' dont les pales 6, 9 respectives s'entrecroisent intimement sur une partie au moins de leur hauteur, préférentiellement une partie majoritaire, soit dans au moins une zone d'engrènement mutuel de filets contraires de premières pales 6 inclinées par rapport à l'axe de l'arbre support 5, soit dans au moins une zone d'interpénétration mutuelle de secondes pales 9 perpendiculaires à l'axe de l'arbre support 5, avantageusement dans les deux types de zones.

L'invention a également pour objet, comme le montre par exemple la figure 10, une installation 14 de traitement et de revalorisation de produits composites à base thermoplastique, par exemple de déchets intégrant à titre majoritaire des produits bitumineux, notamment des membranes bitumineuses, le cas échéant prédécoupées ou fragmentées.

Cette installation 14 est caractérisée en ce qu'elle comprend, en tant que poste(s) de traitement, au moins un mélangeur 1 tel que décrit précédemment, préférentiellement en tant que premier poste de traitement.

Comme représenté figure 10, l'installation 14 peut comprendre deux mélangeurs chauffants 1 tels que décrit ci-dessus, montés en parallèles, alimentés en intrants par une bande transporteuse 15 (transportant par exemple des déchets pré-découpés) et formant chacun le premier poste d'une voie de traitement et de revalorisation, respectivement associé en aval.

Cette installation comprend par exemple deux mélangeurs chauffants 1, montés en parallèles, alimentés en intrants par une bande transporteuse 15 et formant chacun le premier poste d'une voie de traitement et de revalorisation, respectivement associé en aval. Ces mélangeurs 1 sont installés en hauteur de telle manière que leurs extrants liquides ou semi-liquides, évacués par les ouvertures des sorties 2', chutent à travers deux postes de broyage 16 superposés, formés chacun d'un broyeur à rouleaux opposés et dont les entrefers sont alignés. Entre les deux postes de broyage 16 est arrangé un dispositif séparateur de polluants macroscopiques solides sous la forme d'un dispositif de rejet, à organe extracteur mobile, par exemple par pivotement non visible sur la figure 10.

Ensuite, l'extrant purifié de polluants macroscopiques peut être transféré (par exemple par une pompe 17 délicératrice) dans un raffineur 18 avec un tambour monté mobile excentriquement dans une enceinte cylindrique, pour ensuite être stocké dans un réservoir 19, sous forme de produit valorisé réutilisable.

Une telle installation est décrite et représentée dans la demande de brevet évoqué précédemment en introduction.

L'invention vise également un procédé de commande d'un mélangeur 1 tel que décrit précédemment, caractérisé en ce qu'il consiste, soit dans un mode de fonctionnement continu, soit dans un mode de fonctionnement séquentiels par lots (« batch »), à entrainer la ou les vis 4, 4' avec un protocole de commande comprenant au moins deux phases d'entrainement provoquant un déplacement des matériaux dans le mélangeur 1 selon la direction DT du trajet de traitement, séparées par au moins une phase d'entrainement contraire, c'est-à-dire provoquant un déplacement des matériaux traités dans la direction opposée au trajet de traitement, l'occurrence, la durée et le nombre des phases d'entrainement contraire étant soit prédéterminés, soit fonction de valeurs fournies par des capteurs de mesure de paramètres de fonctionnement, tels que par exemple le couple d'entrainement, la composition et/ou la qualité des produits traités, la quantité de matériaux présents dans le mélangeur 1.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de invention, qui est définie par les revendications.

## Revendications

1. Mélangeur chauffant (1) pour le traitement de produits composites à base de matière(s) thermoplastique(s), notamment de déchets d'usines ou de chantiers contenant majoritairement des membranes bitumineuses, ledit mélangeur (1) présentant une constitution allongée définissant un trajet de traitement longitudinal entre au moins une entrée (2) et au moins une sortie (2') et comprenant une auge (3) qui est chauffée et dans laquelle est montée au moins une vis (4, 4'), préférentiellement deux vis (4 et 4') jumelées parallèles et mutuellement interpénétrantes au niveau de leurs filets (4"), formant organe(s) de traitement par réduction dimensionnelle et chauffage et de déplacement vers ladite ou lesdites sortie(s) (2') pour les produits à traiter introduits au niveau de l'entrée (2) ou de chaque entrée (2), ladite ou chaque vis (4, 4') comprenant un arbre support (5) qui est chauffé et entrainé en rotation autour de son axe, le ou chaque arbre (5) étant disposé dans l'auge (3) en étant arrangé selon la direction de trajet (DT) et les produits étant déplacés en cours de traitement depuis la ou les entrée(s) (2) jusqu'au niveau de la ou des sortie(s) (2') sous l'action de la ou des vis (4, 4'), et ledit mélangeur (1) comportant, au niveau de la ou de chaque sortie (2'), un organe (20) de contrôle du flux d'extrant liquide ou semi-liquide de produits traités, s'écoulant à travers la sortie associée (2'),
ledit mélangeur chauffant (1) étant **caractérisé en ce que** l'arbre support (5) est pourvu de pales (9, 9') formant le filet (4") de la vis (4, 4') concernée, **en ce que** l'ouverture de la ou chaque sortie (2') est formée directement dans la paroi (3') de l'auge (3), **en ce que** le ou chaque organe (20) de contrôle du flux d'extrant consiste en une vanne à clapet ou volet pivotant, et **en ce que** ledit clapet ou volet consiste en une portion (3") de la paroi (3') de l'auge (3) balayée par des pales (9, 9'), cette portion (3") pouvant être déplacée, préférentiellement continûment, entre i) une position de fermeture dans laquelle elle obture la sortie (2') considérée et est intégrée à ladite paroi (3') en tant que partie constitutive de cette dernière, préférentiellement avec raccordement surfacique continu avec la face interne de cette paroi, et ii) une position d'ouverture maximale dans laquelle la sortie (2') correspondante est sensiblement totalement ouverte.

2. Mélangeur chauffant selon la revendication 1, **caractérisé en ce que** la ou chaque vanne (20) à clapet pivotant comprend, en plus du clapet (3") formant une portion mobile de la paroi (3') de l'auge (3), un actionneur sous la forme d'un dispositif motorisé à crémaillère (21), déterminant le positionnement en pivotement du clapet (3") considéré , et donc l'état d'ouverture/de fermeture de la sortie (2') correspondante, ce dispositif (21) se présentant avantageusement sous la forme d'un pignon entrainé (21') engrenant avec une crémaillère (21") en arc de cercle solidaire dudit clapet (3").

3. Mélangeur chauffant selon l'une quelconque des revendications 1 et 2, **caractérisé en ce que** l'ouverture de la ou chaque sortie (2') est formée dans une portion incurvée de la paroi (3') de l'auge (3), **en ce que** le clapet (3") considéré, qui constitue une portion mobile de ladite paroi (3') apte et destinée à fermer de manière étanche cette ouverture par rapport à l'extrant, présente une face intérieure avec une surface courbe de rayon identique à celui de la région incurvée environnante de la face interne de la paroi (3') autour de l'ouverture de sortie concernée et **en ce que** l'axe (AP) de la liaison à pivotement dudit clapet (3") avec ladite paroi (3') est parallèle à l'axe de rotation du ou de chacun des arbre(s) (5).

4. Mélangeur chauffant selon l'une quelconque des revendications 1 à 3, **caractérisé en ce que** la ou chaque vanne à clapet pivotant (20) est commandé par un dispositif automatique de régulation (22) associé ou intégré à un système de commande du fonctionnement du mélangeur (1), le cas échéant en relation avec un programme de pilotage du mode de fonctionnement dudit mélangeur (1), ce dispositif (22) évaluant au moins des signaux indicatifs de la quantité de produits présente dans ce mélangeur (1) et commandant la position ou l'état de l'organe (20) en conséquence, par exemple par le biais d'un dispositif motorisé à crémaillère (21), déterminant le positionnement en pivotement du clapet (3") considéré.

5. Mélangeur chauffant selon la revendication 4, **caractérisé en ce que** le dispositif automatique de régulation (22) fait partie d'une boucle d'asservissement du flux d'extrant dudit mélangeur (1) et **en ce que** les signaux indicatifs de la quantité de produits présente dans le mélangeur (1) sont fournis par au moins un moyen (23) de pesée dudit mélangeur (1), par exemple une paire de pesons.

6. Mélangeur chauffant selon l'une quelconque des revendications 2 à 5, **caractérisé en ce que** l'auge (3) comprend, au niveau de la ou de chaque sortie (2') et dans le prolongement vers l'extérieur de l'ouverture de cette dernière, sous forme d'ajour rectangulaire dans la paroi (3') de l'auge (3), un embout (24) formant canal d'évacuation, cet embout (24) fournissant une surface (24') d'écoulement privilégié de l'extrant, attenante à l'ouverture de la sortie (2') concernée et avec laquelle le clapet (3") lors de son mouvement d'ouverture coopère pour définir un passage d'évacuation à section variable.

7. Mélangeur chauffant selon la revendication 6, **caractérisé en ce que** l'extrémité libre du clapet pivotant (3") balaie la surface (24') d'écoulement privilégié sur une partie de son mouvement de pivotement, au moins au début du dégagement de l'ouverture de la sortie (2'), ledit clapet (3") constituant avantageusement une partie du canal d'évacuation (24) dans sa position d'ouverture maximale.

8. Mélangeur chauffant selon l'une quelconque des revendications 1 à 7, **caractérisé en ce que** le filet (4") de la ou chaque vis (4, 4') est un filet interrompu ou discontinu et comprend, sur une majeure partie au moins de la longueur de la vis (4, 4') considérée, une pluralité de premières pales (6) en forme de plaques planes et lisses, séparées entre elles axialement et radialement et toutes arrangées selon un pas de vis constant et avec une inclinaison déterminée par rapport à un plan perpendiculaire à l'axe (AV) de la vis (4, 4') considérée, **en ce que** la ou chaque vis (4, 4') comporte, sur au moins une partie de sa longueur, une pluralité de secondes pales (9) en forme de plaques planes, séparées entre elles et toutes arrangées selon des plans perpendiculaires à l'axe de la vis (4, 4') considérée et **en ce que** lesdites secondes pales (9) sont configurées et arrangées sur l'arbre support (5) concerné de manière à constituer un nombre limité d'alignements (7') de pales selon la direction de l'axe (AV) de la vis (4, 4') et autour de l'arbre (5), des zones dégagées s'étendant entre les alignements (7') voisins le long de la vis (4, 4').

9. Mélangeur selon l'une quelconque des revendications 1 à 8, **caractérisé en ce qu'**au moins certaines premières et/ou secondes pales (6, 9) sont pourvues, au niveau de leur bord libre extérieur (9'), d'au moins une structure de raclage (12) rapportée, saillante radialement par rapport audit bord (9') et déformable élastiquement au moins selon une direction radiale, cette ou ces structures de raclage (12) balayant, avantageusement avec appui glissant sous pression élastique, au moins une partie de la face interne de la paroi (3') de l'auge (3.

10. Mélangeur selon les revendications 2 et 9, **caractérisé en ce qu'**au moins une structure de raclage (12) est présente au niveau de la ou chaque portion (3") de la paroi (3') de l'auge (3) formant clapet, la surface interne de cette portion (3") étant balayée par cette structure à chaque rotation de la vis (4, 4') concernée.

11. Mélangeur selon l'une quelconque des revendications 1 à 10, **caractérisé en ce qu'**il comporte deux vis parallèles jumelées (4 et 4') dont les pales (6, 9) respectives s'entrecroisent intimement sur une partie au moins de leur hauteur, préférentiellement sur une partie majoritaire, soit dans au moins une zone d'engrènement mutuel de filets contraires de premières pales (6) inclinées par rapport à l'axe de l'arbre support (5), soit dans au moins une zone d'interpénétration mutuelle de secondes pales (9) perpendiculaires à l'axe de l'arbre support (5), avantageusement dans les deux types de zones, à chaque vis (4, 4') étant associé une sortie (2') respective pourvue d'un organe (20) correspondant de contrôle du flux d'extrant évacué à travers la sortie (2') concernée.

12. Installation (14) de traitement et de revalorisation de produits composites à base thermoplastique, par exemple de déchets intégrant à titre majoritaire des produits bitumineux, notamment des membranes bitumineuses, le cas échéant fragmentées ou prédécoupées, **caractérisée en ce qu'**elle comprend, en tant que poste(s) de traitement, au moins un mélangeur (1) selon l'une quelconque des revendications 1 à 11, préférentiellement en tant que premier poste de traitement.

13. Installation de traitement et de revalorisation selon la revendication 12, **caractérisée en ce qu'**elle comprend deux mélangeurs chauffants (1), montés en parallèles, alimentés en intrants par une bande transporteuse (15) et formant chacun le premier poste d'une voie de traitement et de revalorisation, respectivement associé en aval, **en ce que** ces mélangeurs (1) sont installés en hauteur de telle manière que leurs extrants liquides ou semi-liquides, évacués par les ouvertures des sorties (2'), chutent à travers deux postes de broyage (16) superposés, formés chacun d'un broyeur à rouleaux opposés et dont les entrefers sont alignés, et **en ce qu'**entre les deux postes de broyage (16) est arrangé un dispositif séparateur de polluants macroscopiques solides sous la forme d'un dispositif de rejet, à organe extracteur mobile, par exemple par pivotement.

14. Procédé de commande d'un mélangeur (1) selon l'une quelconque des revendications 1 à 11, **caractérisé en ce qu'**il consiste, soit dans un mode de fonctionnement continu, soit dans un mode de fonctionnement séquentiel par lots, à entrainer la ou les vis (4, 4') avec un protocole de commande comprenant au moins deux phases d'entrainement provoquant un déplacement des matériaux dans le mélangeur (1) selon la direction (DT) du trajet de traitement, séparées par au moins une phase d'entrainement contraire, c'est-à-dire provoquant un déplacement des matériaux traités dans la direction opposée au trajet de traitement, l'occurrence, la durée et le nombre des phases d'entrainement contraire étant soit prédéterminés, soit fonction de valeurs fournies par des capteurs de mesure de paramètres de fonctionnement, tels que par exemple le couple d'entrainement, la composition et/ou la qualité des produits traités, la quantité de matériaux présents dans le mélangeur (1).

## Patentansprüche

1. Beheizter Mischer (1) zur Behandlung von Verbundprodukten auf der Basis von Thermoplast(en), insbesondere von Fabrik- oder Baustellenabfällen, die überwiegend Bitumenbahnen enthalten, wobei der Mischer (1) einen länglichen Aufbau aufweist, der einen Längsbehandlungsweg zwischen mindestens einem Einlass (2) und mindestens einem Auslass (2') definiert, und einen Trog (3) aufweist, der beheizt wird und in dem mindestens eine Schnecke (4, 4') montiert ist, vorzugsweise zwei parallele und sich gegenseitig an ihren Gewinden (4") durchdringende Zwillingsschnecken (4 und 4'), die ein Organ oder Organe zur Behandlung durch Dimensionsreduktion und Erhitzen und zur Bewegung zu dem Ausgang oder den Ausgängen (2') für die an dem Eingang (2) oder jedem Eingang (2) eingeführten zu behandelnden Produkte bilden, wobei die oder jede Schnecke (4, 4') eine Stützwelle (5) aufweist, die beheizt und um ihre Achse gedreht wird, wobei die oder jede Welle (5) in dem Trog (3) angeordnet ist, indem sie in der Wegrichtung (DT) ausgerichtet ist, und wobei die Produkte während der Behandlung von dem Einlass oder den Einlässen (2) bis zu dem Auslass oder den Auslässen (2') unter der Wirkung der Schnecken (4, 4') transportiert werden und wobei der Mischer (1) an dem oder jedem Auslass (2') ein Organ (20) zur Steuerung des flüssigen oder halbflüssigen Extrudatflusses von behandelten Produkten aufweist, der durch den zugehörigen Auslass (2') fließt, wobei der beheizte Mischer (1) **dadurch gekennzeichnet ist, dass** die Stützwelle (5) mit Schaufeln (9, 9') versehen ist, die das Gewinde (4") der betreffenden Schnecke (4, 4') bilden, so dass die Öffnung des oder jedes Auslasses (2') direkt in der Wand (3') des Trogs (3) ausgebildet ist, so dass das oder jedes Organ (20) zur Steuerung des Extrudatflusses aus einem Klappenventil oder einer Schwenkklappe besteht, und dass das Ventil oder die Klappe aus einem Abschnitt (3") der Wand (3') des Trogs (3) besteht, der von Schaufeln (9, 9') abgestrichen wird, wobei dieser Abschnitt (3") vorzugsweise kontinuierlich zwischen i) einer Schließstellung, in der er den betrachteten Auslass (2') verschließt und in die Wand (3') als deren Bestandteil integriert ist, vorzugsweise mit kontinuierlicher flächiger Verbindung mit der Innenseite dieser Wand, und ii) einer maximalen Öffnungsstellung, in der der entsprechende Auslass (2') im Wesentlichen vollständig geöffnet ist, verschoben werden kann.

2. Beheizter Mischer nach Anspruch 1, **dadurch gekennzeichnet, dass** das oder jedes Ventil (20) mit schwenkbarer Klappe zusätzlich zu der Klappe (3"), die einen beweglichen Abschnitt der Wand (3') des Trogs (3) bildet, ein Stellglied in Form einer motorisierten Vorrichtung mit Zahnstange (21) aufweist, das die Schwenkposition der betrachteten Klappe (3") und somit den Öffnungs-/Schließzustand des entsprechenden Auslasses (2') bestimmt, wobei diese Vorrichtung (21) vorteilhafterweise in Form eines angetriebenen Ritzels (21') vorliegt, das in eine kreisbogenförmige Zahnstange (21") eingreift, die fest mit der Klappe (3") verbunden ist.

3. Beheizter Mischer nach einem der Ansprüche 1 und 2, **dadurch gekennzeichnet, dass** die Öffnung des oder jedes Auslasses (2') in einem gekrümmten Abschnitt der Wand (3') des Trogs (3) ausgebildet ist, so dass das betrachtete Ventil (3"), das einen beweglichen Abschnitt der Wand (3') darstellt, der geeignet und dazu bestimmt ist, diese Öffnung in Bezug auf das Extrudat dicht zu verschließen, eine Innenseite mit einer gekrümmten Oberfläche mit einem Radius aufweist, der identisch mit dem des umgebenden gekrümmten Bereichs der Innenseite der Wand (3') um die betreffende Auslassöffnung ist, und dass die Achse (AP) der Schwenkverbindung der Klappe (3") mit der Wand (3') parallel zur Drehachse der Welle oder jeder der Wellen (5) verläuft.

4. Beheizter Mischer nach einem der Ansprüche 1 bis 3, **dadurch gekennzeichnet, dass** das oder jedes Ventil (20) mit schwenkbarer Klappe von einer automatischen Regelvorrichtung (22) gesteuert wird, die mit einem System zur Steuerung des Betriebs des Mischers (1) verbunden oder in dieses integriert ist, gegebenenfalls in Verbindung mit einem Programm zur Steuerung der Betriebsart des Mischers (1), wobei diese Vorrichtung (22) zumindest Signale auswertet, die auf die in diesem Mischer (1) vorhandene Produktmenge hinweisen, und die Position oder den Zustand des Organs (20) entsprechend steuert, beispielsweise über eine motorisierte Vorrichtung mit Zahnstange (21), die die Schwenkposition der betreffenden Klappe (3") bestimmt.

5. Beheizter Mischer nach Anspruch 4, **dadurch gekennzeichnet, dass** die automatische Regelvorrichtung (22) Teil einer Regelschleife für den Extrudatfluss des Mischers (1) ist und dass die Signale, die die im Mischer (1) vorhandene Produktmenge anzeigen, von mindestens einem Wägemittel (23) des Mischers (1), z. B. einem Paar von Wägestücken, geliefert werden.

6. Beheizter Mischer nach einem der Ansprüche 2 bis 5, **dadurch gekennzeichnet, dass** der Trog (3) an dem oder jedem Auslass (2') und in der Verlängerung der Öffnung des letzteren nach außen in Form eines rechteckigen Durchbruchs in der Wand (3') des Trogs (3) ein Endstück (24) aufweist, das einen Auslasskanal bildet, wobei dieses Endstück (24) eine bevorzugte Auslassfläche (24') für das Extrudat bereitstellt, die an die Öffnung des betreffenden Auslasses (2') angrenzt und mit der die Klappe (3") bei ihrer Öffnungsbewegung zusammenwirkt, um einen Auslasskanal mit variablem Querschnitt zu definieren.

7. Beheizter Mischer nach Anspruch 6, **dadurch gekennzeichnet, dass** das freie Ende der schwenkbaren Klappe (3") die bevorzugte Strömungsfläche (24') über einen Teil ihrer Schwenkbewegung zumindest zu Beginn der Freigabe der Öffnung des Auslasses (2') abstreicht, wobei die Klappe (3") in ihrer maximalen Öffnungsstellung vorteilhafterweise einen Teil des Auslasskanals (24) bildet.

8. Beheizter Mischer nach einem der Ansprüche 1 bis 7, **dadurch gekennzeichnet, dass** das Gewinde (4") der oder jeder Schnecke (4, 4') ein unterbrochenes oder diskontinuierliches Gewinde ist und zumindest auf einem größeren Teil der Länge der betreffenden Schnecke (4, 4') eine Vielzahl von ersten Schaufeln (6) in Form von ebenen und glatten Platten aufweist, die axial und radial voneinander getrennt sind und alle mit einer konstanten Steigung und mit einer bestimmten Neigung in Bezug auf eine Ebene senkrecht zur Achse (AV) der betrachteten Schnecke (4, 4') angeordnet sind, so dass die oder jede Schnecke (4, 4') auf mindestens einem Teil ihrer Länge eine Vielzahl von zweiten Schaufeln (9) in Form von ebenen Platten aufweist, die voneinander getrennt sind und alle in Ebenen senkrecht zur Achse der betreffenden Schnecke (4, 4') angeordnet sind, und so dass die zweiten Schaufeln (9) auf der betreffenden Stützwelle (5) so konfiguriert und angeordnet sind, dass sie eine begrenzte Anzahl von Fluchten (7') von Schaufeln in Richtung der Achse (AV) der Schnecke (4, 4') und um die Welle (5) herum bilden, wobei sich zwischen den benachbarten Fluchten (7') entlang der Schnecke (4, 4') freie Bereiche erstrecken.

9. Mischer nach einem der Ansprüche 1 bis 8, **dadurch gekennzeichnet, dass** mindestens einige erste und/oder zweite Schaufeln (6, 9) auf der Höhe ihres äußeren freien Randes (9') mit mindestens einer aufgesetzten Rakelstruktur (12) versehen sind, die in Bezug auf den Rand (9') radial hervorsteht und zumindest in einer radialen Richtung elastisch verformbar ist, wobei diese Rakelstruktur(en) (12) vorteilhafterweise mit gleitender Auflage unter elastischem Druck zumindest einen Teil der Innenseite der Wand (3') des Trogs (3) abstreicht (abstreichen).

10. Mischer nach den Ansprüchen 2 und 9, **dadurch gekennzeichnet, dass** mindestens eine Rakelstruktur (12) an dem oder jedem Abschnitt (3") der Wand (3') des Trogs (3), der eine Klappe bildet, vorhanden ist, wobei die Innenfläche dieses Abschnitts (3") bei jeder Drehung der betreffenden Schnecke (4, 4') von dieser Struktur abgestrichen wird.

11. Mischer nach einem der Ansprüche 1 bis 10, **dadurch gekennzeichnet, dass** er zwei parallele Zwillingsschnecken (4 und 4') aufweist, deren jeweilige Schaufeln (6, 9) sich zumindest über einen Teil ihrer Höhe, vorzugsweise über einen Großteil, eng kreuzen, entweder in mindestens einer Zone des gegenseitigen Eingriffs von gegenläufigen Gewinden der ersten Schaufeln (6), die bezüglich der Achse der Stützwelle (5) geneigt sind, oder in mindestens einer Zone des gegenseitigen Ineinandergreifens von zweiten Schaufeln (9), die senkrecht zur Achse der Stützwelle (5) stehen, vorteilhafterweise in beiden Arten von Zonen, wobei jeder Schnecke (4, 4') ein jeweiliger Auslass (2') zugeordnet ist, der mit einem entsprechenden Organ (20) zur Kontrolle des durch den betreffenden Auslass (2') abgeführten Extrudatflusses versehen ist.

12. Anlage (14) zur Behandlung und Aufbereitung von Verbundprodukten auf thermoplastischer Basis, beispielsweise von Abfällen, die mehrheitlich bituminöse Produkte, insbesondere Bitumenbahnen, enthalten, die gegebenenfalls zerkleinert oder vorgeschnitten sind, **dadurch gekennzeichnet, dass** sie als Behandlungsstation(en) mindestens einen Mischer (1) nach einem der Ansprüche 1 bis 11, vorzugsweise als erste Behandlungsstation, aufweist.

13. Anlage zur Behandlung und Aufbereitung nach Anspruch 12, **dadurch gekennzeichnet, dass** sie zwei parallel montierte, beheizte Mischer (1) aufweist, die von einem Förderband (15) mit Intrudatfluss versorgt werden und jeweils die erste Station einer Behandlungs- und Aufbereitungsstrecke bilden, die jeweils nachfolgend zugeordnet ist, dass diese Mischer (1) in der Höhe so installiert sind, dass ihre flüssigen oder halbflüssigen Extrudate, die durch die Öffnungen der Auslässe (2') abgeführt werden, durch zwei übereinander angeordnete Zerkleinerungsstationen (16) fallen, die jeweils aus einem Zerkleinerer mit gegenüberliegenden Walzen bestehen und deren Spaltöffnungen ausgerichtet sind, und dass zwischen den beiden Zerkleinerungsstationen (16) eine Trennvorrichtung für feste makroskopische Schadstoffe in Form einer Abweisungsvorrichtung mit einem beweglichen, z. B. schwenkbaren, Extraktionsorgan angeordnet ist.

14. Verfahren zum Steuern eines Mischers (1) nach einem der Ansprüche 1 bis 11, **dadurch gekennzeichnet, dass** es darin besteht, entweder in einer kontinuierlichen Betriebsart oder in einer sequenziellen Betriebsart mit Chargen die Schnecke(n) (4, 4') mit einem Steuerprotokoll anzutreiben, das mindestens zwei Antriebsphasen aufweist, die eine Bewegung der Materialien im Mischer (1) in der Richtung (DT) des Behandlungswegs bewirken, getrennt durch mindestens eine Phase des Gegenantriebs, d. h. eine Bewegung der bearbeiteten Materialien in die dem Behandlungsweg entgegengesetzte Richtung bewirkt, wobei das Auftreten, die Dauer und die Anzahl der Gegenantriebsphasen entweder vorbestimmt sind oder von Werten abhängen, die von Sensoren zur Messung von Betriebsparametern geliefert werden, wie z. B. dem Antriebsmoment, der Zusammensetzung und/oder der Qualität der bearbeiteten Produkte, der Menge der im Mischer (1) vorhandenen Materialien.

## Claims

1. Heatable mixer (1) for the treatment of composite products based on thermoplastic material(s), in particular factory or site waste containing mostly bituminous membranes, said mixer (1) having an elongate composition defining a longitudinal treatment path between at least one inlet (2) and at least one outlet (2'), and comprising a trough (3) which is heated, and in which there is fitted at least one screw (4, 4'), and preferably two twin screws (4 and 4') which are parallel and interpenetrate at their threads (4"), forming a unit/units for treatment by dimensional reduction and heating, and displacement towards said outlet(s) (2') for the products to be treated introduced at the (2) or each (2) inlet, said or each screw (4, 4') comprising a support shaft (5) which is heated, and rotated around its axis, the or each shaft (5) being positioned in the trough (3) by being arranged in the direction of the path (DT), and the products being displaced during the treatment from the inlet (s) (2) as far as the outlet (s) (2') under the action of the screw(s) (4, 4'), and said mixer (1) comprising, at the or each outlet (2'), a unit (20) to control the flow of liquid or semi-liquid output of products treated, flowing through the associated outlet (2'),
said heatable mixer (1) being **characterized in that** the support shaft (5) is provided with blades (9, 9') forming the thread (4") of the screw (4, 4') concerned, **in that** the opening of the or each outlet (2') is formed directly in the wall (3') of the trough (3), **in that** the or each unit (20) to control the flow of output consists of a flap valve or pivoting valve, and **in that** said flap valve or pivoting valve consists of a portion (3") of the wall (3') of the trough (3) which is swept by blades (9, 9'), this portion (3") being able to be displaced, preferably continuously, between i) a closure position in which it closes the outlet (2') concerned, and is incorporated in said wall (3') as a component part thereof, preferably with continuous surface connection with the inner face of this wall, and ii) a maximal opening position in which the corresponding outlet (2') is substantially totally open.

2. Heatable mixer according to Claim 1, **characterized in that** the or each pivoting flap valve (20) comprises, in addition to the flap valve (3") which forms a movable portion of the wall (3') of the trough (3), an actuator in the form of a motorized device (21) with a rack, which determines the positioning in pivoting of the flap valve (3") concerned, and thus the state of opening/closure of the corresponding outlet (2'), this device (21) advantageously being in the form of a driven pinion (21') which engages with a rack (21") in the form of an arc of a circle integral with said flap valve (3").

3. Heatable mixer according to either of Claims 1 and 2, **characterized in that** the opening of the or each outlet (2') is formed in a curved portion of the wall (3') of the trough (3), **in that** the flap valve (3") concerned, which constitutes a movable portion of said wall (3') which can, and is designed to, close this opening in a sealed manner against the output, has an inner face having a curved surface with a radius identical to that of the surrounding curved region of the inner face of the wall (3') around the outlet opening concerned, and **in that** the axis (AP) of connection with pivoting of said flap valve (3") with said wall (3') is parallel to the axis of rotation of the or each shaft (5).

4. Heatable mixer according to any one of Claims 1 to 3, **characterized in that** the or each pivoting flap valve (20) is controlled by an automatic control device (22) associated with, or incorporated in, a system to control the operation of the mixer (1), if applicable in relation with a program to control the operating mode of said mixer (1), this device (22) evaluating at least signals which are indicative of the quantity of products present in this mixer (1), and controlling the position or state of the unit (20) accordingly, for example by means of a motorized device (21) with a rack, thus determining the positioning in pivoting of the flap valve (3") concerned.

5. Heatable mixer according to Claim 4, **characterized in that** the automatic control device (22) forms part of a loop to control the flow of output from said mixer (1), and **in that** the signals which indicate the quantity of products present in the mixer (1) are provided by at least one weighing means (23) of said mixer (1), for example a pair of weighing cells.

6. Heatable mixer according to any one of Claims 2 to 5, **characterized in that**, at the or each outlet (2') and in the extension to the exterior of the opening thereof, in the form of a rectangular opening in the wall (3') of the trough (3), the trough (3) comprises a joining piece (24) forming a discharge channel, this joining piece (24) providing a preferential flow surface (24') for the output, adjoining the opening of the outlet (2') concerned, and with which the flap valve (3") cooperates during its opening movement in order to define a discharge passage with a variable cross-section.

7. Heatable mixer according to Claim 6, **characterized in that** the free end of the pivoting flap valve (3") sweeps the preferential flow surface (24') over a part of its pivoting movement, at least at the start of the clearing of the opening of the outlet (2'), said flap valve (3") advantageously constituting part of the discharge channel (24) in its maximal opening position.

8. Heatable mixer according to any one of Claims 1 to 7, **characterized in that** the thread (4") of the or each screw (4, 4') is an interrupted or discontinuous thread, and comprises, over at least most of the length of the screw (4, 4') concerned, a plurality of first blades (6) in the form of smooth flat plates, separated from one another axially and radially, and all arranged according to a constant screw pitch, and with a determined inclination relative to a plane perpendicular to the axis (AV) of the screw (4, 4') concerned, **in that** the or each screw (4, 4') comprises, on at least part of its length, a plurality of second blades (9) in the form of flat plates, which are separated from one another, and are all arranged on planes perpendicular to the axis of the screw (4, 4') concerned, and **in that** said second blades (9) are configured and arranged on the support shaft (5) concerned such as to constitute a limited number of alignments (7') of blades in the direction of the axis (AV) of the screw (4, 4') and around the shaft (5), with cleared areas extending between the adjacent alignments (7') along the screw (4, 4').

9. Mixer according to any one of Claims 1 to 8, **characterized in that** at least some first and/or second blades (6, 9) are provided, at their outer free edge (9'), with at least one added-on scraping structure (12), which projects radially relative to said edge (9'), and is resiliently deformable at least in a radial direction, with this scraping structure or these scraping structures (12) sweeping, advantageously with sliding support under resilient pressure, at least part of the inner face of the wall (3') of the trough (3).

10. Mixer according to Claims 2 and 9, **characterized in that** at least one scraping structure (12) is present at the or each portion (3") of the wall (3') of the trough (3) forming a flap valve, with the inner surface of this portion (3") being swept by this structure at each rotation of the screw (4, 4') concerned.

11. Mixer according to any one of Claims 1 to 10, **characterized in that** it comprises two parallel twin screws (4 and 4'), the respective blades (6, 9) of which interweave closely on at least part of their height, preferably on most of it, either in at least an area of mutual engagement of the opposing threads of first blades (6) which are inclined relative to the axis of the support shaft (5), or in at least one area of mutual interpenetration of second blades (9) perpendicular to the axis of the support shaft (5), advantageously in both types of areas, each screw (4, 4') being associated with a respective outlet (2') provided with a corresponding unit (20) to control the output flow discharged through the outlet (2') concerned.

12. Installation (14) for treatment and upgrading of composite products based on thermoplastic, for example waste which includes mostly bituminous products, in particular bituminous membranes which if applicable are precut or fragmented, **characterized in that** it comprises as a treatment station/treatment stations at least one mixer (1) according to any one of Claims 1 to 11, preferably as the first treatment station.

13. Installation for treatment and upgrading according to Claim 12, **characterized in that** it comprises two heatable mixers (1), fitted in parallel, supplied with inputs by a conveyor belt (15), and each forming the first station of a treatment and upgrading line, respectively associated downstream, **in that** these mixers (1) are installed at a height such that their liquid or semi-liquid outputs, discharged by the openings of the outlets (2'), fall through two superimposed crushing stations (16), each formed by a crusher with opposing rollers, and the air gaps of which are aligned, and **in that**, between the two crushing stations (16), a solid macroscopic pollutants separator device is arranged, in the form of a discharge device, with a unit for movable extraction, for example by pivoting.

14. Method for controlling a mixer (1) according to any one of Claims 1 to 11, **characterized in that** it consists, either in a continuous operation mode, or in a mode of sequential operation in batches, of driving the screw(s) (4, 4') with a control protocol comprising at least two driving phases giving rise to displacement of the materials in the mixer (1) in the direction (DT) of the treatment path, separated by at least one opposing driving phase, i.e. giving rise to displacement of the treated materials in the direction opposite the treatment path, with the occurrence, duration and number of the opposing driving phases being either predetermined, or dependent on values provided by sensors for measurement of operating parameters, such as, for example, the driving torque, the composition and/or the quality of the products treated, and the quantity of materials present in the mixer (1).
